# EUROPEAN PATENT APPLICATION

(11) **EP 4 844 860 A1**
(43) Date of publication of application: **25.11.2026**
(21) Application number: 24918590.1
(22) Date of filing: 23.01.2024
(51) Int. Cl.: H01M 10/0562, H01M 10/0565, H01M 10/052

(54) **SUPPORT FOR SECONDARY BATTERY, SOLID ELECTROLYTE SHEET, AND SECONDARY BATTERY**

(30) Priority: 15.01.2024 JP 2024004128
(71) Applicant: Nippon Kodoshi Corporation, Kochi-shi, Kochi 781-0395 (JP)
(72) Inventor: MORIMOTO, Kenta, Kochi-shi Kochi 781-0395 (JP); OGAWA, Kentaro, Kochi-shi Kochi 781-0395 (JP); KUROIWA, Masahiro, Kochi-shi Kochi 781-0395 (JP)
(74) Representative: Betten & Resch
(86) International application number: PCT/JP2024/001815
(87) International publication number: WO 2025/154301

(57) **Abstract**

A support for retaining a solid electrolyte of a secondary battery has a configuration including at least one selected from paper and nonwoven fabric, and containing fibrillated fibers and non-fibrillated fibers, in which a permeation rate of perfluoropolyether in a thickness direction is 2% to 30%.

## Description

### Technical Field

The present invention relates to a support for a secondary battery that retains a solid electrolyte, a solid electrolyte sheet, and a secondary battery including the support.

### Background Art

A lithium-ion secondary battery using a liquid electrolyte (hereinafter referred to as an "electrolyte solution") has been used as a secondary battery having high energy density. A lithium-ion secondary battery using an electrolyte solution has a configuration in which a separator is interposed between a positive electrode and a negative electrode, and the separator retains the electrolyte solution.

In a lithium-ion secondary battery, an organic electrolyte solution is mainly used as the electrolyte solution. Since the organic electrolyte solution is a liquid, problems caused by liquid leakage and flammability are of concern. Therefore, in order to improve the safety of lithium-ion secondary batteries, a secondary battery using a solid electrolyte instead of an electrolyte solution (hereinafter referred to as an "all-solid-state battery") has been developed. Since an all-solid-state battery inherently includes a solid electrolyte, the all-solid-state battery exhibits no liquid leakage and has higher flame retardancy and heat resistance than a battery including an electrolyte solution, so that the all-solid-state battery has attracted attention as a secondary battery having excellent safety. Since all-solid-state batteries have high safety, small all-solid-state batteries have been mass-produced for applications such as wearable devices that come into direct contact with the human body.

In addition, unlike a lithium-ion secondary battery using an electrolyte solution, the all-solid-state battery is a battery that exhibits less characteristic degradation at high temperatures. Thus, the all-solid-state battery is a secondary battery that does not require a cooling device and is also advantageous for improving energy density per unit volume of a battery pack. All-solid-state batteries are expected to be further increased in size, for applications such as electric vehicles, because all-solid-state batteries are advantageous as secondary batteries having high volumetric energy density.

Unlike a secondary battery using an electrolyte solution interposed between a positive electrode and a negative electrode, an all-solid-state battery includes a solid electrolyte layer interposed between a positive electrode and a negative electrode instead of a separator retaining an electrolyte solution. For example, for a lithium-ion all-solid-state battery, lithium ions pass from the positive electrode through the solid electrolyte layer to the negative electrode during charging.

On the other hand, during discharging, lithium ions pass from the negative electrode through the solid electrolyte layer to the positive electrode. As described above, in the case of an all-solid-state battery, as ion species (hereinafter referred to as "carrier ions") for conduction between the positive electrode and the negative electrode, various ion species such as sodium ions, in addition to lithium ions, have been studied from the viewpoint of avoiding problems related to the stable supply of resources. Since the carrier ions migrate between the positive electrode and the negative electrode through the solid electrolyte layer, it is necessary to form carrier-ion pathways in the thickness direction of the solid electrolyte layer.

That is, the solid electrolyte layer interposed between the positive electrode and the negative electrode of the all-solid-state battery is required to have a function of providing ionic conduction of carrier ions between the positive electrode and the negative electrode and a function of preventing a short circuit between a positive electrode active material and a negative electrode active material. In addition, in order to achieve excellent volumetric energy density and to reduce internal resistance, the solid electrolyte layer is required to have a small thickness.

As methods for forming the solid electrolyte layer, a method of mixing a solid electrolyte and a binder and rolling the mixture under heating to form a sheet, a method of applying a solid electrolyte slurry onto an electrode and drying the slurry, and the like have been adopted.

However, in a case of forming a solid electrolyte layer for an all-solid-state battery to be used in a large-sized battery for applications such as electric vehicles, the solid electrolyte layer obtained by, for example, the method of performing rolling under heating to form a sheet is liable to be fractured or cracked during handling. In addition, in a case where the method of applying a slurry containing a solid electrolyte onto an electrode and drying the slurry is used, strain occurs in the solid electrolyte layer during the drying, leading to the occurrence of cracks. Therefore, it is difficult to stably form a thin and uniform solid electrolyte layer. In a case where a thin and uniform solid electrolyte layer cannot be stably formed, ion conduction deteriorates, and furthermore, a short circuit occurs.

On the other hand, in order to prevent a short circuit, the thickness of the solid electrolyte layer can be increased. However, in a case where the thickness is large, volumetric energy density decreases, the interelectrode distance increases, and internal resistance increases.

In order to solve the above-described problems, it has been proposed to use, in an all-solid-state battery, a solid electrolyte sheet formed by incorporating a solid electrolyte into a thin-film sheet (hereinafter referred to as a "support"), and integrating the solid electrolyte and the support with each other. Various configurations relating to a support for an all-solid-state battery and a nonwoven fabric base material for a lithium secondary battery separator have been proposed.

For example, a technique relating to a solid electrolyte sheet having a plurality of through-holes, the solid electrolyte sheet being formed by etching a film serving as a support, is disclosed (see, for example, Patent Literature 1). In this technique, since the through-holes formed by the etching process are filled with a solid electrolyte, an all-solid-state battery having excellent energy density and output characteristics is formed.

In addition, a technique relating to a solid electrolyte sheet using a support having a porosity of 60% or more and 95% or less and a thickness of 5 µm or more and less than 20 µm is disclosed (see, for example, Patent Literature 2). It is disclosed that the solid electrolyte sheet has self-supporting properties despite having a small thickness.

Furthermore, a technique relating to a nonwoven fabric base material for a lithium secondary battery separator, the nonwoven fabric base material containing undrawn polyester fibers and moisture-heat-bondable fibers as binder fibers, is disclosed (see, for example, Patent Literature 3). In this technique, it is disclosed that the undrawn polyester fibers are softened or melted by heat-press treatment such as calendaring and firmly bonded to other fibers, and that the moisture-heat-bondable fibers exhibit a bonding function by flowing or easily deforming in a wet state. Incorporation of these binder fibers into the nonwoven fabric base material enables the formation of a nonwoven fabric base material for a lithium secondary battery separator having high tensile strength and high productivity.

### Citation List

### Patent Literatures

Patent Literature 1: JP 2017-103146 A
Patent Literature 2: JP 2020-77488 A
Patent Literature 3: JP 2020-161243 A

### Summary of Invention

### Technical Problem

However, in the technique described in Patent Literature 1, in a case where the solid electrolyte sheet is produced, the through-holes are filled with the solid electrolyte. Therefore, only the inside of the formed through-holes is filled with the solid electrolyte. Therefore, an insulating film portion remains in areas other than the through-holes, and interfaces that do not allow carrier ions to pass are formed between the positive electrode and the film portion and between the negative electrode and the film portion. As a result, the interfacial resistance between the solid electrolyte sheet and each of the positive electrode and the negative electrode tends to increase, and the resistance of the all-solid-state battery using this support increases.

In addition, in the technique described in Patent Literature 2, although the support is a support having sufficient porosity, the support has a dense structure in a case where the material constituting the support includes fine fibers. As a result, it is difficult to impregnate a solid electrolyte slurry into the interior of the support and to permeate the solid electrolyte slurry in the thickness direction of the support. For this reason, the formation of carrier-ion pathways in the thickness direction of the solid electrolyte sheet is insufficient, resulting in a solid electrolyte sheet having high internal resistance.

In addition, in the technique described in Patent Literature 2, in a case where the number of fibers constituting the support is small, the permeability of the solid electrolyte slurry in the thickness direction of the support is excessively high, and there is a concern regarding the retention capability of the solid electrolyte slurry. As a result, the solid electrolyte slurry cannot remain in the support, and the retention effect of the solid electrolyte by the support cannot be sufficiently obtained, resulting in an increase in resistance.

Furthermore, in the technique described in Patent Literature 3, the moisture-heat-bondable fibers contained in the nonwoven fabric base material, as described above, undergo flow or deformation during expression of the bonding function. Therefore, the moisture-heat-bondable fibers may fail to maintain a fibrous form, and voids inside the nonwoven fabric base material may be filled. Furthermore, in a case where a large amount of binder fibers that cannot maintain a fibrous shape is contained, the density increases. As a result, the impregnability of the solid electrolyte slurry into the interior of the nonwoven fabric base material and the permeability in the thickness direction of the nonwoven fabric base material are insufficient. For this reason, the formation amount of carrier-ion pathways formed within the solid electrolyte sheet decreases, and the resistance of the all-solid-state battery increases.

In order to solve the above-described problems, the present invention provides a support for a secondary battery capable of reducing internal resistance of a solid electrolyte layer, a solid electrolyte sheet using the support, and a secondary battery using the support.

### Solution to Problem

A support for a secondary battery of the present invention is a support for retaining a solid electrolyte of a secondary battery, the support including: at least one selected from paper and nonwoven fabric; and fibrillated fibers and non-fibrillated fibers, in which a permeation rate of perfluoropolyether in a thickness direction is 2% to 30%.

In addition, in a solid electrolyte sheet of the present invention, a solid electrolyte is retained by a support having a thin film shape, including at least one selected from paper and nonwoven fabric, and containing fibrillated fibers and non-fibrillated fibers, in which a permeation rate of perfluoropolyether in a thickness direction of the support is 2% to 30%.

In addition, a secondary battery of the present invention includes: a positive electrode layer; a negative electrode layer; and a solid electrolyte layer disposed between the positive electrode layer and the negative electrode layer. In this secondary battery, the solid electrolyte layer is formed as a solid electrolyte sheet in which a solid electrolyte is retained by a support. The solid electrolyte sheet includes a support and a solid electrolyte retained by the support, the support including at least one selected from paper and nonwoven fabric, containing fibrillated fibers and non-fibrillated fibers, and having a permeation rate of perfluoropolyether in a thickness direction of 2% to 30%.

### Advantageous Effects of Invention

According to the present invention, it is possible to provide the support for a secondary battery capable of reducing internal resistance of the solid electrolyte layer, the solid electrolyte sheet using the support, and the secondary battery using the support for a secondary battery.

### Description of Embodiments

Hereinafter, examples of embodiments for carrying out the present invention will be described below, but the present invention is not limited to the following examples.

Note that the description will be given in the following order.
1. Embodiment of Support for Secondary Battery (First Embodiment)
2. Embodiment of Secondary Battery (Second Embodiment)

### <1. Embodiment of Support for Secondary Battery (First Embodiment)>

Hereinafter, a specific embodiment of a support for a secondary battery will be described.

The support for a secondary battery according to the present embodiment (hereinafter also simply referred to as a "support") is used in a secondary battery to form a solid electrolyte layer interposed between a positive electrode and a negative electrode. The support is used for retaining a solid electrolyte of a secondary battery and includes at least one selected from paper and nonwoven fabric, the support having a permeation rate of perfluoropolyether in a thickness direction of 2% to 30%. In the present disclosure, a numerical range indicated by "to" includes the numerical values indicated as the upper and lower limits.

The solid electrolyte layer interposed between the positive electrode and the negative electrode is required to allow carrier ions to conduct between the positive electrode and the negative electrode during charge and discharge. For this purpose, it is necessary to form carrier-ion pathways between the positive electrode and the solid electrolyte layer, within the solid electrolyte layer, and between the solid electrolyte layer and the negative electrode. That is, in a case where the interfacial resistance between the positive electrode and the solid electrolyte layer and the interfacial resistance between the solid electrolyte layer and the negative electrode are reduced, and the internal resistance of the solid electrolyte layer is also reduced, the resistance of an all-solid-state battery can be lowered.

The inventors of the present application have found that, as one factor hindering further reduction of the internal resistance of the solid electrolyte sheet, the liquid permeability in the thickness direction of the support has an influence. Therefore, in the support according to the present embodiment, unlike conventional permeability evaluations using gases, a liquid is used under conditions similar to those during actual coating to evaluate the diffusion of the solid electrolyte slurry into the interior of the support and the liquid retention capability of the support.

In a case where the liquid permeability in the thickness direction of the support is too low, the number of carrier-ion pathways formed within the solid electrolyte sheet is reduced. On the other hand, in a case where the liquid permeability in the thickness direction of the support is too high, the retention capability of the solid electrolyte slurry by the support is low, the solid electrolyte slurry remaining in the support is reduced, and the number of carrier-ion pathways formed within the solid electrolyte sheet is reduced. As a result, in either of the above-described cases, the resistance of the obtained solid electrolyte sheet is increased.

Therefore, by optimizing the liquid permeability in the thickness direction of the support, it is possible to increase the carrier-ion pathways formed within the solid electrolyte sheet. As a result, the resistance of the solid electrolyte layer can be reduced.

In the present embodiment, the permeation rate of perfluoropolyether in the thickness direction is adopted as an index for measuring the liquid permeability of the support in the thickness direction. Perfluoropolyether is a liquid that allows for evaluating the permeability in a thickness direction according to the internal structure of the support, because perfluoropolyether is a substance that is chemically inert, has a low surface tension, and is in a liquid state at room temperature.

For example, in a case where the support has high hydrophilicity, upon a similar evaluation being performed using water, the support is affected by the water, causing constituent fibers of the support to swell and resulting in a change in the internal structure of the support. In addition, in a case where the hydrophilicity of the support is low, the wettability to the support is low, leading to a reduction in the impregnability into the interior of the support. As a result, the impregnability and permeability depending on the structure of the support cannot be accurately evaluated. Furthermore, due to the high surface tension of water, the impregnation and permeation of water into the interior of the support are hindered, so that an accurate evaluation on the influence of the internal structure of the support cannot be obtained. In addition, for example, in a case where a similar evaluation is performed using a general organic solvent, the organic solvent evaporates during the test because the organic solvent has a low vapor pressure. As a result, the permeation amount cannot be accurately determined.

That is, as compared to other liquids, perfluoropolyether has a small interaction with the support and thus has a minimal influence on the fibers constituting the support. Therefore, the inherent characteristics of the support can be accurately evaluated for supports having different types of fibers. In the present application, a perfluoropolyether, namely propene, 1,1,2,3,3-hexafluoro, oxidized, polymerized (surface tension: 16 mN/m), is used.

The permeation amount of perfluoropolyether in the thickness direction is the mass of the perfluoropolyether that has permeated to the back surface of the support after a predetermined amount of the perfluoropolyether is added dropwise onto the surface of the support and is then impregnated into and diffuses through the interior of the support.

The permeation rate of perfluoropolyether in the thickness direction was calculated by dividing the permeation amount of perfluoropolyether in the thickness direction by the mass of the perfluoropolyether added dropwise and converting the result into a percentage. That is, the determination of the permeation rate of perfluoropolyether enables evaluation of the permeability of a solid electrolyte slurry in the thickness direction of the support.

A case where the permeation rate of perfluoropolyether in the thickness direction is low indicates that the permeability of the solid electrolyte slurry in the thickness direction of the support is low. On the other hand, in a case where the permeation rate of perfluoropolyether in the thickness direction is high, the permeability of the solid electrolyte slurry into the interior of the support is excessively high, resulting in a low retention capability of the support with respect to the solid electrolyte slurry.

The support has a permeation rate of perfluoropolyether in the thickness direction controlled within a range of 2% to 30%.

The support having the permeation rate of perfluoropolyether in the thickness direction within the above-described range is excellent in permeability and retention capability of the solid electrolyte slurry in the thickness direction of the support, and thus enables a required amount of the solid electrolyte slurry to be uniformly impregnated into the interior of the support. As a result, a necessary number of carrier-ion pathways can be formed within the solid electrolyte sheet to be obtained. As a result of the above-described effects, the internal resistance of the solid electrolyte layer can be reduced. That is, the use of this support can reduce the resistance of the all-solid-state battery.

In addition, from the viewpoint of permeability and retention capability of the support with respect to the solid electrolyte slurry, the permeation rate of perfluoropolyether in the thickness direction of the support is more preferably in a range of 4% to 25%.

In a case where the permeation rate of perfluoropolyether in the thickness direction of the support is less than the above-described range, the permeation amount of the solid electrolyte slurry in the thickness direction of the support is insufficient. Therefore, the number of carrier-ion pathways formed within the solid electrolyte sheet in the thickness direction is reduced.

On the other hand, in a case where the permeation rate of perfluoropolyether in the thickness direction of the support exceeds the above-described range, significant bleed-through occurs, and the amount of the solid electrolyte slurry that can be retained by the support is small. As a result, the number of carrier-ion pathways formed within the solid electrolyte sheet in the thickness direction is reduced, and the internal resistance of the solid electrolyte sheet increases.

In a case where the permeation rate of perfluoropolyether is within the above-described range, the support is not particularly limited with respect to other configurations such as thickness, basis weight, density, porosity, tensile strength, and the like. In a case where the permeation rate of perfluoropolyether is within the above-described range, it can be evaluated, without limitation by the configuration of the support, that a sufficient number of carrier-ion pathways are formed within the solid electrolyte sheet, the internal resistance of the solid electrolyte sheet can be reduced, and the resistance of the all-solid-state battery can be reduced. From the viewpoint of permeability, retention capability, and tensile strength of the support with respect to the solid electrolyte slurry, the basis weight of the support is more preferably in a range of 1.0 to 15.0 g/m².

The support includes at least one selected from paper and nonwoven fabric. Preferably, the support includes only at least one of paper and nonwoven fabric. The reason is as follows.

Paper refers to a material produced by bonding plant fibers and other fibers. In addition, nonwoven fabric refers to a sheet-like material produced by processing various fiber webs, such as natural, regenerated, and synthetic fibers, through mechanical, chemical, thermal, or combinations thereof without using a loom, and bonding constituent fibers to one another with an adhesive or by the adhesive strength of the fibers themselves.

That is, since paper and nonwoven fabric have a structure in which fibers are randomly arranged, the paper and nonwoven fabric have numerous voids of various sizes and numerous through-holes of various sizes therein. Therefore, the applied solid electrolyte slurry can spread not only in the thickness direction but also in a planar direction. That is, the applied solid electrolyte slurry includes a portion remaining on the surface of the support, a portion remaining within the support, and a portion passing through through-holes from the surface side to reach the back surface side.

Therefore, in a solid electrolyte sheet produced using at least one of paper or nonwoven fabric as the support, the solid electrolyte is present on the surface of the support, and the interior of the support is also filled with the solid electrolyte, and good carrier-ion pathways can thus be formed. As a result, the internal resistance of the solid electrolyte sheet can be reduced, and the interfacial resistance between the solid electrolyte sheet and the positive electrode or negative electrode can be reduced. As a result, a reduction in the resistance of the all-solid-state battery can be achieved

Materials that can be used as the material constituting the support are not particularly limited as long as the fibers do not repel the solid electrolyte slurry and do not adversely affect the solid electrolyte physically or chemically, and examples thereof include organic fibers such as cellulose fibers, polyamide fibers, polyester fibers, polypropylene fibers, and acrylic fibers, and inorganic fibers such as glass fibers and alumina fibers. In addition, one or more fibers selected from these fibers can be used. A support having excellent fillability of the solid electrolyte can be obtained by using these fibers.

Furthermore, from the viewpoints of shape retention and tensile strength of the support, it is desirable that the support contain fibers having adhesive strength. Examples of the fibers having adhesive strength include fibers having fibrils on fiber surfaces (hereinafter referred to as "fibrillated fibers"), synthetic resin binder fibers, and the like.

For example, the adhesive strength of fibrillated cellulose fibers includes physical bonding due to entanglement of cellulose fibers and chemical bonding due to hydrogen bonding of hydroxyl groups in cellulose. In addition, the adhesive strength of fibrillated polyamide fibers and fibrillated acrylic fibers includes physical bonding due to entanglement of the fibers. Bonding by any of these fibers is preferable because it contributes to shape retention of the support and development of tensile strength.

Examples of synthetic resin binder fibers include those that retain a fibrous form after formation of the support and those that cannot retain the fibrous form and, for example, become film-like. Binder fibers that retain a fibrous form after formation of the support are preferable in that inhibition of impregnability and permeability is less likely to occur and improvement in tensile strength of the support can be achieved.

The binder fibers that retain a fibrous shape after formation of the support develop adhesive strength through thermal bonding at fiber entanglement points. Therefore, the binder fibers that retain a fibrous form as a constituent material of the support can reduce breakage and the like due to physical impact, and are less likely to inhibit the impregnation and permeation of the solid electrolyte slurry into the interior of the support during the formation of a solid electrolyte sheet, because bonding occurs only at fiber contact points.

On the other hand, synthetic resin binder fibers that cannot retain a fibrous form after formation of the support undergo a change in which the fibers become film-like due to heat in the support production process, and a resin constituting the fibers melts when heated to a temperature near the melting point or softening point of the resin, and the fibers are fused at entanglement points. That is, in a case where a binder not in the fibrous form after formation of the support is used, upon expression of the binder function, the binder component forms a film layer in inter-fiber gaps of the support, and the voids are filled with the binder component. As a result, impregnability and permeability of the solid electrolyte into the interior of the support may be inhibited, and in a case where the binder is used, attention is required for the content proportion.

The materials that can be used as synthetic resin binder fibers that retain a fibrous shape and have adhesive strength are not particularly limited as long as the fibers do not repel the solid electrolyte slurry and do not adversely affect the solid electrolyte physically or chemically, and examples thereof include fibrillated fibers such as beaten cellulose fibers, beaten polyamide fibers, and beaten acrylic fibers, polyamide binder fibers, polyester binder fibers, polyethylene binder fibers, and polypropylene-polyethylene core-sheath type binder fibers. In addition, one or more fibers selected from these fibers can be used.

The support contains both fibrillated fibers and fibers that do not have fibrils (hereinafter referred to as non-fibrillated fibers). That is, the support includes at least one selected from paper and nonwoven fabric and contains fibrillated fibers and non-fibrillated fibers.

Since the fibrillated fibers have branched fibrils on fiber surfaces, the number of fibers capable of supporting the solid electrolyte is large, and the solid electrolyte can be supported uniformly. On the other hand, since non-fibrillated fibers do not have branched fibrils on fiber surfaces, the fibers do not inhibit the impregnation of the solid electrolyte during the impregnation of the solid electrolyte into the support, and the solid electrolyte is uniformly impregnated in the thickness direction of the support.

That is, a support containing fibrillated fibers and non-fibrillated fibers has impregnability of the solid electrolyte slurry in the thickness direction of the support and uniform supportability of the solid electrolyte.

As a result, a uniform solid electrolyte sheet can be obtained using the support having the above-described configuration. That is, a solid electrolyte sheet having low resistance is obtained.

In addition, the support is not particularly limited with respect to the content of fibrillated fibers and non-fibrillated fibers relative to all fibers constituting the support, or the content ratio between fibrillated fibers and non-fibrillated fibers. Preferably, the support contains fibrillated fibers in a range of 1% to 99% by mass relative to all fibers constituting the support. Still more preferably, the support contains fibrillated fibers in a range of 50% to 85% by mass relative to all fibers constituting the support.

In the support, as a method for setting a permeation rate of perfluoropolyether in a thickness direction to be in a range of 2% to 30%, for example, in a case where fibrillated fibers are used, a fiber length may be controlled to 0.1 to 2 mm. In order to obtain fibrillated fibers having a fiber length of 0.1 to 2 mm, for example, a method may be employed in which fibers are beaten until a "Canadian Standard" freeness (CSF) value is 0 to 400 ml. In addition, in a case where non-fibrillated fibers are used, an average fiber diameter of the non-fibrillated fibers may be controlled to 1 to 15 µm, and a fiber length may be controlled to 1 to 6 mm. However, the present invention is not limited thereto as long as the permeation rate of perfluoropolyether in the thickness direction can be set to 2% to 30%.

There is no particular limitation on a method for producing the support, and the support can be produced by a dry method or a wet method, and from the viewpoint of uniformity of formation of the support and the like, a papermaking method of depositing fibers dispersed in water on a wire, and dehydrating and drying the deposited fibers to form a sheet is preferable. There is no particular limitation on a papermaking form of the support as long as the permeation rate of perfluoropolyether in the thickness direction can be satisfied. Papermaking forms such as a Fourdrinier papermaking method, a tanmo papermaking method, and a cylinder papermaking method may be adopted, and a structure in which a plurality of layers formed by these papermaking methods are combined may also be used. In addition, during the papermaking, additives such as a dispersant, a defoaming agent, and a paper strength enhancing agent may be added, and after formation of a paper layer, post-treatments such as paper strength enhancing treatment, liquid affinity treatment, calendering treatment, thermal calendering treatment, embossing treatment, and the like may be performed.

### <2. Embodiment of Secondary Battery (Second Embodiment)>

Next, an embodiment of a secondary battery using the above-described support will be described. The secondary battery is, for example, an all-solid-state battery including a positive electrode, a negative electrode, and a solid electrolyte layer. In this case, the solid electrolyte layer is disposed to be interposed between the positive electrode and the negative electrode. The solid electrolyte layer is formed as a solid electrolyte sheet in which a solid electrolyte is retained by a support. The solid electrolyte sheet includes a support for a secondary battery and a solid electrolyte, the solid electrolyte is retained by the support, and the solid electrolyte and the support have a configuration integrated with each other.

There is no particular limitation on types of the positive electrode and the negative electrode used in the all-solid-state battery. For example, in the all-solid-state battery, known positive electrodes and negative electrodes may be used; however, the present invention is not limited thereto.

In addition, there is no particular limitation on a type of the all-solid-state battery, and depending on selection of materials constituting the all-solid-state battery, the all-solid-state battery can be formed as, for example, a lithium-ion secondary battery, a sodium-ion secondary battery, and the like.

The above-described all-solid-state battery can be used as, for example, a storage battery for a mobile communication device, a portable electronic device, an electric bicycle, an electric two-wheeled vehicle, an electric automobile, a small household power storage device, and the like.

### [Positive Electrode and Negative Electrode]

In the secondary battery, a positive electrode active material used in a positive electrode layer and a negative electrode active material used in a negative electrode layer are not particularly limited, and it is sufficient that the materials function as a positive electrode and a negative electrode of an all-solid-state battery for various carrier ions.

The positive electrode is formed to include a positive electrode active material-containing layer and a positive electrode current collector. For example, in a case where the all-solid-state battery is a lithium-ion secondary battery, the positive electrode needs to contain a material capable of occluding and releasing lithium ions.

As the positive electrode current collector, for example, aluminum or the like can be used.

Examples of the positive electrode active material include titanium sulfide (TiS₂), molybdenum sulfide (MoS₂), iron sulfide (FeS, FeS₂), copper sulfide (CuS), and nickel sulfide (Ni₃S₂) in a sulfide-based material. In addition, examples of the positive electrode active material in an oxide-based system include bismuth oxide (Bi₂O₃), bismuth lead oxide (Bi₂Pb₂O₅), copper oxide (CuO), vanadium oxide (V₆O₁₃), lithium cobalt oxide (LiCoO₂), lithium nickel oxide (LiNiO₂), lithium manganese oxide (LiMnO₂), Li(NiCoMn)O₂, Li(NiCoAl)O₂, Li(NiCo)O₂, and the like. In addition, these may also be used in combination.

Furthermore, the negative electrode is formed to include a negative electrode current collector and a negative electrode active material-containing layer. For example, in a case where the all-solid-state battery is a lithium-ion secondary battery, metal lithium, metal indium, or a material capable of occluding and releasing lithium ions may be used as the negative electrode active material.

As the negative electrode current collector, for example, copper or the like can be used.

Examples of the negative electrode active material include, for example, carbon materials, specifically artificial graphite, graphite carbon fibers, resin-fired carbon, pyrolytic vapor-grown carbon, coke, mesocarbon microbeads (MCMB), furfuryl alcohol resin-fired carbon, polyacene, pitch-based carbon fibers, vapor-grown carbon fibers, natural graphite, non-graphitizable carbon, and the like. Alternatively, a mixture thereof may be used. In addition, examples thereof include metal lithium, metal indium, metal aluminum, metal silicon, and the like as metals themselves, or alloys obtained by combining these metals with other elements or compounds.

The positive electrode and the negative electrode constituting the all-solid-state battery are configured by selecting two types of compounds from materials capable of constituting an electrode, comparing charge-discharge potentials of the two types of compounds, and using a material exhibiting a noble potential for the positive electrode and a material exhibiting a base potential for the negative electrode to constitute any battery.

### [Solid Electrolyte Layer]

In the all-solid-state battery, the solid electrolyte layer is formed as a solid electrolyte sheet in which a solid electrolyte is retained by a support. There is no particular limitation on a type of the solid electrolyte constituting the solid electrolyte sheet, and for example, known materials usable as a solid electrolyte of an all-solid-state battery may be used.

In addition, the solid electrolyte is not particularly limited, and any solid electrolyte may be used as long as it is capable of conducting carrier ions between the positive electrode and the negative electrode. For example, an oxide-based solid electrolyte, a sulfide-based solid electrolyte, and the like may be used. In addition, other components such as a binder may be added as necessary.

Examples of the sulfide-based solid electrolyte capable of conducting lithium ions include a sulfide-based amorphous solid electrolyte and a sulfide-based crystalline solid electrolyte. Specific examples of the sulfide-based amorphous solid electrolyte include Li₂S-SiS₂, Li₂S-GeS₂, Li₂, S-P₂S₅, Li₂S-B₂S₃, Li₂S-SiS₂-Li₃PO₄, Li₂S-S, iS₂-Li₂SO₄, Li₂S-P₂S₅-LiI, Li₂S-P₂S₅-P₂O₅-, LiI, Li₂S-B₂S₃-LiI, Li₂S-P₂S₅-Li₂O-LiI, Li₂, and S-SiS₂-B₂S₃-LiI.

Note that the sulfide-based amorphous solid electrolyte may contain other elements.

Specific examples of the sulfide-based crystalline solid electrolyte include Li_{3.25}Ge_{0.25}P_{0.75}S₄, Li₁₀GeP₂S₁₂, Li₆PS₅Cl, and the like; however, the sulfide-based crystalline solid electrolyte is not limited to these elemental compositions.

The solid electrolyte may be other than a sulfide-based solid electrolyte or an oxide-based solid electrolyte, and other examples thereof include semi-solid polymer electrolytes such as polyethylene oxide, polypropylene oxide, polyvinylidene fluoride, and polyacrylonitrile containing carrier ions. The solid electrolyte may be a so-called gel-type electrolyte in which an electrolyte solution is retained in a polymer solid electrolyte such as a polyethylene oxide-based polymer or a polymer containing at least one selected from a polyorganosiloxane chain and a polyoxyalkylene chain.

### [Method for Producing Solid Electrolyte Sheet]

There is no particular limitation on a method for producing the solid electrolyte sheet, and a conventional method in the present technical field can be applied.

For example, a method of preparing a slurry obtained by dispersing a solid electrolyte in a solvent and applying the prepared slurry to a support and drying the applied slurry may be employed. There is no particular limitation on a solvent used for preparation of a slurry of the solid electrolyte as long as the solvent does not adversely affect performance of the solid electrolyte. Examples thereof include a non-aqueous solvent.

There is no particular limitation on a coating method of applying a slurry containing the solid electrolyte to one surface or both surfaces of the support; however, examples thereof include slide die coating, comma die coating, comma reverse coating, gravure coating, gravure reverse coating, and the like.

The drying performed after application of the slurry containing the solid electrolyte may be carried out, for example, by a drying apparatus using hot air, a heater, high frequency, or the like.

Note that the solid electrolyte sheet may be used as it is after drying; however, the solid electrolyte sheet may be further pressurized to increase mechanical strength and density. Examples of the pressurizing method include, for example, sheet pressing, roll pressing, and the like.

### [Method for Producing All-Solid-State Battery]

An all-solid-state battery can be produced by disposing a solid electrolyte layer including the solid electrolyte sheet between the above-described positive and negative electrode layers, and bonding these together by laminating. There is no particular limitation on a method for bonding; however, examples thereof include a method of laminating sheets and pressurizing and pressure-bonding the laminated sheets, a method of pressurizing by passing the sheets between two rolls (roll-to-roll), and the like.

For the purpose of improving adhesion between the solid electrolyte layer and the positive electrode layer or the negative electrode layer, an active material having ion conductivity or an adhesive material that does not inhibit ion conductivity may be disposed at a bonding interface.

### Examples

Hereinafter, specific examples and the like of the support according to embodiments of the present invention will be described.

First, supports of Examples 1 to 6 and Comparative Examples 1 to 8 were prepared by the following method. Note that the support was formed, except for Comparative Example 3, as a paper formed by a papermaking method or as a wet nonwoven fabric.

### [Example 1]

A raw material obtained by mixing 85% by mass of cellulose fibers having a CSF value of 0 ml and an average fiber length of 0.2 mm with 15% by mass of non-fibrillated cellulose fibers having an average fiber diameter of 5 µm and an average fiber length of 3 mm was subjected to Fourdrinier papermaking to obtain a support having a thickness of 25 µm, a basis weight of 14.0 g/m², and a density of 0.56 g/cm³.

### [Example 2]

A raw material obtained by mixing 55% by mass of polyamide fibers having a CSF value of 400 ml and an average fiber length of 1.8 mm with 45% by mass of polyester binder fibers having an average fiber diameter of 2 µm and an average fiber length of 2 mm was subjected to tanmo papermaking to obtain a support having a thickness of 8 µm, a basis weight of 1.4 g/m², and a density of 0.18 g/cm³.

### [Example 3]

A raw material obtained by mixing 65% by mass of cellulose fibers having a CSF value of 150 ml and an average fiber length of 1.2 mm with 35% by mass of polyester fibers having an average fiber diameter of 8 µm and an average fiber length of 5 mm was subjected to cylinder papermaking to obtain a support having a thickness of 20 µm, a basis weight of 8.4 g/m², and a density of 0.42 g/cm³.

### [Example 4]

A raw material obtained by mixing 70% by mass of cellulose fibers having a CSF value of 30 ml and an average fiber length of 0.8 mm with 30% by mass of polyamide fibers having an average fiber diameter of 15 µm and an average fiber length of 6 mm was subjected to tanmo papermaking to obtain a support having a thickness of 15 µm, a basis weight of 5.3 g/m², and a density of 0.35 g/cm³.

### [Example 5]

A raw material obtained by mixing 99% by mass of cellulose fibers having a CSF value of 5 ml and an average fiber length of 0.5 mm with 1% by mass of polyamide binder fibers having an average fiber diameter of 8 µm and an average fiber length of 3 mm was subjected to Fourdrinier papermaking. The obtained nonwoven fabric was subjected to calendering to obtain a support having a thickness of 25 µm, a basis weight of 15.0 g/m², and a density of 0.60 g/cm³.

### [Example 6]

A raw material obtained by mixing 1% by mass of acrylic fibers having a CSF value of 50 ml and an average fiber length of 1.0 mm, 19% by mass of non-fibrillated acrylic fibers having an average fiber diameter of 10 µm and an average fiber length of 3 mm, and 80% by mass of polyester binder fibers having an average fiber diameter of 5 µm and an average fiber length of 3 mm was subjected to tanmo papermaking to obtain a support having a thickness of 10 µm, a basis weight of 1.6 g/m², and a density of 0.16 g/cm³.

### [Comparative Example 1]

A raw material obtained by mixing 15% by mass of polyester fibers having an average fiber diameter of 16 µm and an average fiber length of 5 mm with 85% by mass of polyester binder fibers having an average fiber diameter of 4 µm and an average fiber length of 3 mm was subjected to cylinder papermaking with reference to the method for producing a support described in Example 1 of Patent Literature 2, to obtain a support having a thickness of 19 µm, a basis weight of 3.8 g/m², and a density of 0.20 g/cm³.

### [Comparative Example 2]

A raw material obtained by mixing 40% by mass of polyester fibers having an average fiber diameter of 2.3 µm and an average fiber length of 3 mm, 50% by mass of polyester binder fibers having an average fiber diameter of 4.2 µm and an average fiber length of 3 mm, and 10% by mass of ethylene-vinyl alcohol fibers having an average fiber diameter of 7.2 µm and an average fiber length of 5 mm was subjected to tanmo papermaking and thermal calendering with reference to the method for producing a support described in Example 1 of Patent Literature 3, to obtain a support having a thickness of 12 µm, a basis weight of 7.0 g/m², and a density of 0.58 g/cm³.

### [Comparative Example 3]

A support produced by a method similar to the method described in Example 2 of Patent Literature 1 was prepared to obtain a support of Comparative Example 3. In Comparative Example 3, a polyimide film was subjected to etching treatment to form 200 µm square holes, to obtain a support having a thickness of 30 µm, a basis weight of 8.8 g/m², and a density of 0.29 g/cm³.

### [Comparative Example 4]

A raw material obtained by mixing 90% by mass of cellulose fibers having a CSF value of 0 ml and an average fiber length of 0.2 mm with 10% by mass of non-fibrillated cellulose fibers having an average fiber diameter of 3 µm and an average fiber length of 3 mm was subjected to Fourdrinier papermaking to obtain a support having a thickness of 25 µm, a basis weight of 15.5 g/m², and a density of 0.62 g/cm³.

### [Comparative Example 5]

A raw material obtained by mixing 45% by mass of polyamide fibers having a CSF value of 430 ml and an average fiber length of 2.3 mm with 55% by mass of polyester binder fibers having an average fiber diameter of 2 µm and an average fiber length of 2 mm was subjected to tanmo papermaking to obtain a support having a thickness of 15 µm, a basis weight of 3.0 g/m², and a density of 0.20 g/cm³.

### [Comparative Example 6]

A raw material obtained by mixing 60% by mass of cellulose fibers having a CSF value of 10 ml and an average fiber length of 0.5 mm with 40% by mass of polyester fibers having an average fiber diameter of 0.7 µm and an average fiber length of 0.5 mm was subjected to Fourdrinier papermaking to obtain a support having a thickness of 20 µm, a basis weight of 7.9 g/m², and a density of 0.40 g/cm³.

### [Comparative Example 7]

A raw material obtained by mixing 50% by mass of polyamide fibers having a CSF value of 200 ml and an average fiber length of 1.1 mm with 50% by mass of polyester binder fibers having an average fiber diameter of 16 µm and an average fiber length of 7 mm was subjected to tanmo papermaking to obtain a support having a thickness of 20 µm, a basis weight of 3.0 g/m², and a density of 0.15 g/cm³.

### [Comparative Example 8]

A raw material obtained by mixing 70% by mass of cellulose fibers having a CSF value of 0 ml and an average fiber length of 0.04 mm with 30% by mass of polyester fibers having an average fiber diameter of 3 µm and an average fiber length of 3 mm was subjected to tanmo papermaking. However, a paper layer could not be formed, and a support could not be obtained.

### [Preparation of All-Solid-State Battery]

Next, all-solid-state batteries were produced using the supports of the above Examples and Comparative Examples. A specific preparation method is as follows.

### (Positive Electrode Structure)

A ternary LiNiCoAlO₂ powder was used as a positive electrode active material, an amorphous Li₂S-P₂S₅ powder was used as a sulfide-based solid electrolyte, and carbon fibers were used as a conductive additive, and these were mixed together. An anhydrous xylene solution in which styrene-butadiene rubber (SBR) was dissolved as a binder was mixed with the mixed powder to prepare a positive electrode coating liquid. A positive electrode structure was obtained by applying the positive electrode coating liquid to an aluminum foil current collector serving as a positive electrode current collector, drying the positive electrode coating liquid, and further rolling the resultant.

### (Negative Electrode Structure)

Graphite was used as a negative electrode active material, an amorphous Li₂S-P₂S₅ powder was used as a sulfide-based solid electrolyte, polyvinylidene fluoride (PVdF) was used as a binder, and N-methyl-2-pyrrolidone (NMP) was used as a solvent; these were mixed to prepare a negative electrode coating liquid. A negative electrode structure was obtained by applying the negative electrode coating liquid to a copper foil current collector serving as a negative electrode current collector, drying the negative electrode coating liquid, and further rolling the resultant.

### (Solid Electrolyte Sheet)

An amorphous Li₂S-P₂S₅ powder was used as a sulfide-based solid electrolyte, SBR was used as a binder, and xylene was used as a solvent; these were mixed to prepare a solid electrolyte slurry.

The solid electrolyte slurry was applied to the supports of the above-described Examples and Comparative Examples and dried to obtain solid electrolyte sheets.

### [Production of All-Solid-State Battery]

A negative electrode structure having a size of 88 mm × 58 mm, a solid electrolyte sheet having a size of 92 mm × 62 mm, and a positive electrode structure having a size of 87 mm × 57 mm were laminated, subjected to dry lamination processing, and bonded together to obtain a single cell of an all-solid-state battery.

The obtained single cell was placed in an aluminum laminate film to which terminals were attached, and was vacuumed and heat-sealed to be packaged.

### [Method for Measuring Properties of Support and All-Solid-State Battery]

Measurement of properties of the prepared supports and all-solid-state batteries was performed under the following conditions and by the following methods.

### [CSF value]

The CSF value was measured in accordance with "JIS P8121-2 (ISO 5267-2) 'Pulps-Determination of drainability-Part 2: "Canadian Standard" freeness method'".

### [Average Fiber Length]

### [Fiber Length of Fibers]

The fiber length was measured using an apparatus described in "JIS P 8226-2 (ISO 16065-2) 'Pulps-Determination of Fibre length by automated optical analysis-Part 2: Unpolarized light method'", specifically a Fiber Tester PLUS (manufactured by Lorentzen & Wettre), and the length-weighted average fiber length was defined as the fiber length of fibers.

### [Fiber Length of Polyester Fibers and Polyester Binder Fibers]

Since the polyester fibers and the polyester binder fibers are optically transparent, the fibers could not be accurately recognized in images. Therefore, the fiber length measurement by the above-described automated optical analysis method could not be performed accurately. Accordingly, the fiber length of the polyester fibers and the fiber length of the polyester binder fibers were measured by the following method.

A prepared slide of a specimen in which fibers were randomly dispersed was prepared. Fiber lengths of the fibers on the prepared slide were measured using a scale directly.

### [Thickness]

The thickness of the support was measured in accordance with "JIS C 2300-2 'Cellulosic papers for electrical purposes-Part 2: Methods of test' 5.1 Thickness", using a micrometer described in "5.1.1 Measuring instruments and measuring method a) In the case of using an external micrometer", with the measuring force modified to 1.5 N and the diameter of the pressure surface modified to 14.3 mmφ, by the method of folding ten sheets as specified in "5.1.3 In the case of measuring thickness by folding paper".

### [Basis Weight]

The basis weight of the absolutely dry support was measured by a method specified in "JIS C 2300-2 'Cellulosic papers for electrical purposes-Part 2: Methods of test' 6 Basis weight".

### [Density]

The density of the support was calculated using the following equation. $Density \left(g/{cm}^{3}\right) = W / T$ W: basis weight (g/m²), T: thickness (µm)

### [Porosity]

The porosity of the support was calculated using the following equation. In a case where a plurality of materials constituting the support were used in combination, the average specific gravity of the constituent fibers was first determined by calculation in proportion to the mixing ratio, and the porosity was then calculated. $Porosity \left(%\right) = \left(1-\left(D/S\right)\right) \times 100$ D: support density (g/cm³), S: specific gravity of constituent fiber (g/cm³)

### [Permeation Rate of Perfluoropolyether in Thickness Direction]

A test piece cut to 50 mm × 50 mm was fixed to a bottom of a cylinder having a diameter of 12 mm as an inner diameter and a diameter of 15 mm as an outer diameter. The cylinder to which the test piece was attached was placed so that the test piece was in contact with a glass plate. 0.1 ml of perfluoropolyether was added dropwise into the cylinder, and the mass of the added perfluoropolyether was measured. The perfluoropolyether was added dropwise and then allowed to stand for 1 minute, and the cylinder to which the test piece was attached was removed. The mass of the perfluoropolyether that had impregnated and permeated through the support from the interior of the cylinder and adhered to the glass plate was measured. The permeation rate of perfluoropolyether in the thickness direction of the support was calculated using the following equation.$Permeation rate \left(%\right) = w 2 / w 1 \times 100$
w1: mass (g) of perfluoropolyether added dropwise
w2: mass (g) of perfluoropolyether permeated

### [Tensile Strength]

The maximum tensile load in a longitudinal direction (machine direction) of the support was measured at a test width of 15 mm by a method specified in "JIS P 8113 (ISO 1924-2) 'Paper and board-Determination of tensile properties-Part 2: Constant rate of elongation method'", and the measured value was defined as the tensile strength of the support.

### [Evaluation of Self-Supporting Properties]

Each of the prepared solid electrolyte sheets was evaluated for self-supporting properties.

The prepared solid electrolyte sheet having a size of 92 mm × 62 mm was lifted while holding an end portion on a short-side edge. A case where no fracture or crack was visually observed in the solid electrolyte sheet was evaluated as "O", and a case where a fracture or crack was visually observed in the solid electrolyte sheet upon lifting was evaluated as "×".

### [Internal Resistance of Solid Electrolyte Sheet]

The all-solid-state battery was charged to 4.0 V at a current density of 0.1 C under an environment of 25°C, and impedance in a frequency range of 0.1 Hz to 1 MHz was measured using an LCR meter. The arc portion of the obtained Cole-Cole plot was fitted to a semicircular shape having the x-axis as a base, and a numerical value at an intersection between a right end of the semicircle and the x-axis was defined as a resistance value.

### [Discharge Capacity of Solid Electrolyte Sheet]

The all-solid-state battery was charged to 4.0 V at a current density of 0.1 C under an environment of 25°C, and thereafter discharged to 2.5 V at a current density of 0.1 C, and a discharge capacity at that time was measured.

Table 1 shows fiber names and blending ratios of constituent fibers of the supports of Examples 1 to 6 and Comparative Examples 1 to 8 described above.

**[Table 1]**

| | Composition of support | | | | |
|---|---|---|---|---|---|
| | Fiber name | Blending ratio | CSF | Average fiber diameter | Average fiber length |
| | | mass% | ml | *µ*m | mm |
| Example 1 | Cellulose | 85 | 0 | - | 0.2 |
| | Non-fibrillated cellulose | 15 | | 5 | 3 |
| Example 2 | Polyamide | 55 | 400 | - | 1.8 |
| | Polyester binder | 45 | | 2 | 2 |
| Example 3 | Cellulose | 65 | 150 | - | 1.2 |
| | Polyester | 35 | | 8 | 5 |
| Example 4 | Cellulose | 70 | 30 | - | 0.8 |
| | Polyamide | 30 | | 15 | 6 |
| Example 5 | Cellulose | 99 | 5 | - | 0.5 |
| | Polyamide binder | 1 | - | 8 | 3 |
| Example 6 | Acrylic | 1 | 50 | - | 1.0 |
| | Non-fibrillated acrylic | 19 | - | 10 | 3 |
| | Polyester binder | 80 | - | 5 | 3 |
| Comparative Example 1 | Polyester | 15 | - | 16 | 5 |
| | Polyester binder | 85 | - | 5 | 4 |
| Comparative Example 2 | Polyester | 40 | - | 2.3 | 3 |
| | Polyester binder | 50 | - | 4.2 | 3 |
| | Ethylene-vinyl alcohol | 10 | - | 7.2 | 5 |
| Comparative Example 3 | Subjecting polyimide film to etching treatment to form 200 µm square holes | - | - | - | - |
| Comparative Example 4 | Cellulose | 90 | 0 | - | 0.2 |
| | Non-fibrillated cellulose | 10 | - | 3 | 3 |
| Comparative Example 5 | Polyamide | 45 | 430 | - | 2.3 |
| | Polyester binder | 55 | - | 2 | 2 |
| Comparative Example 6 | Cellulose | 60 | 10 | - | 0.5 |
| | Polyester | 40 | - | 0.7 | 0.5 |
| Comparative Example 7 | Polyamide | 50 | 200 | - | 1.1 |
| | Polyester binder | 50 | - | 16 | 7 |
| Comparative Example 8 | Cellulose | 70 | 0 | - | 0.04 |
| | Polyester | 30 | - | 3 | 3 |

Table 2 shows evaluation results of properties of the supports of the above-described Examples and Comparative Examples, self-supporting properties of the solid electrolyte sheets, and battery characteristics.

| | Properties of support | | | | | | Solid electrolyte layer | Battery characteristics | |
|---|---|---|---|---|---|---|---|---|---|
| | Thickness | Basis weight | Density | Porosity | Permeation rate | Tensile strength | Self-supporting properties | Resistance | Discharge capacity |
| | *µ*m | g/m² | g/cm³ | % | % | N/15mm | - | Ω·cm² | mAh/g |
| Example 1 | 25 | 14.0 | 0.56 | 63 | 2.3 | 10.3 | ○ | 789 | 76 |
| Example 2 | 8 | 1.4 | 0.18 | 88 | 28.8 | 2.2 | ○ | 769 | 77 |
| Example 3 | 20 | 8.4 | 0.42 | 71 | 4.6 | 6.6 | ○ | 739 | 81 |
| Example 4 | 15 | 5.3 | 0.35 | 76 | 23.9 | 4.1 | ○ | 722 | 90 |
| Example 5 | 25 | 15.0 | 0.60 | 60 | 2.1 | 13.1 | ○ | 801 | 75 |
| Example 6 | 10 | 1.6 | 0.16 | 88 | 29.3 | 2.0 | ○ | 799 | 76 |
| Comparative Example 1 | 19 | 3.8 | 0.20 | 86 | 46.0 | 2.1 | ○ | 1,036 | 49 |
| Comparative Example 2 | 12 | 7.0 | 0.58 | 57 | 0.4 | 9.7 | ○ | 1,315 | 44 |
| Comparative Example 3 | 30 | 8.8 | 0.29 | 79 | 5.9 | 6.1 | ○ | 1,499 | 47 |
| Comparative Example 4 | 25 | 15.5 | 0.62 | 59 | 1.5 | 12.6 | ○ | 1,124 | 51 |
| Comparative Example 5 | 15 | 3.0 | 0.20 | 86 | 33.0 | 2.3 | ○ | 1,011 | 58 |
| Comparative Example 6 | 20 | 7.9 | 0.40 | 73 | 0.8 | 6.6 | ○ | 1,591 | 40 |
| Comparative Example 7 | 20 | 3.0 | 0.15 | 89 | 37.3 | 1.9 | ○ | 1,421 | 44 |
| Comparative Example 8 | - | - | - | - | - | - | - | - | - |

Hereinafter, evaluation results of the all-solid- state battery using the supports of Examples and Comparative Examples will be described in detail.

The solid electrolyte sheets using the supports of Examples were able to be formed as solid electrolyte sheets having self-supporting properties.

In addition, the all-solid-state batteries using the supports of Examples had lower resistance and higher discharge capacity as compared with the all-solid-state batteries using the supports of Comparative Examples 1 to 7.

In Comparative Example 8, a support could not be obtained. It is considered that sufficient strength to withstand a manufacturing process was not present because the fibrillated fibers used in Comparative Example 8 had a short fiber length of 0.04 mm.

That is, from a comparison between each of Examples and Comparative Example 8, it can be understood that a fiber length of the fibrillated fibers used in the support is preferably 0.1 mm or more.

The all-solid-state batteries using the supports of Comparative Examples 1, 5, and 7 had higher resistance and lower discharge capacity as compared with the all-solid-state batteries using the supports of Examples. In addition, the supports of Comparative Examples 1, 5, and 7 had a higher permeation rate of perfluoropolyether in the thickness direction as compared with the supports of Examples.

An amount of the solid electrolyte slurry that the supports were able to retain was small because the supports of Comparative Examples 1, 5, and 7 had high permeation rates of perfluoropolyether in the thickness direction of 46.0%, 33.0%, and 37.3%, respectively. As a result, it is considered that carrier-ion pathways formed inside the solid electrolyte sheet in the thickness direction were reduced.

In the support of Comparative Example 1, non-fibrillated fibers having a large fiber diameter of 16 µm were used as compared with Examples. As a result, it is considered that spaces in the thickness direction were larger than those of Examples. In the support of Comparative Example 5, fibrillated fibers having a CSF value of 430 ml and a fiber length of 2.3 mm were used, the CSF value being higher and the fiber length being longer than those of Examples. As a result, it is considered that spaces formed inside the obtained support were larger than those of Examples. In the support of Comparative Example 7, non-fibrillated fibers having a fiber diameter of 16 µm and a fiber length of 7 mm, the fiber diameter being larger and the fiber length being longer than those of Examples were used. As a result, when the fibers are entangled with each other, the structure is bulky, and spaces inside the support increase.

That is, from a comparison between Examples and Comparative Examples 1, 5, and 7, it can be understood that the permeation rate of perfluoropolyether in the thickness direction of the support is preferably 30% or less.

The all-solid-state batteries using the supports of Comparative Examples 2, 4, and 6 had higher resistance and lower discharge capacity as compared with the all-solid-state batteries using the supports of Examples. The supports of Comparative Examples 2, 4, and 6 contained 10% by mass of ethylene-vinyl alcohol fibers that undergo shape change due to moist heat. Therefore, after formation of the support, the fibers did not remain in a fibrous form but formed a film layer inside the support, so that inter-fiber gaps are filled. Therefore, it is considered that impregnation of the solid electrolyte slurry into the interior of the support was inhibited.

Since the support of Comparative Example 4 had a high basis weight of 15.5 g/m², a large number of fibers inside the support were present. Therefore, it is considered that in a case where a predetermined amount of perfluoropolyether was added dropwise, impregnation and permeation of the perfluoropolyether in the thickness direction of the support were inhibited. In the support of Comparative Example 6, non-fibrillated fibers having a fiber diameter of 0.7 µm and a fiber length of 0.5 mm, the fiber diameter being smaller and the fiber length being shorter than those of Examples were used. For this reason, it is considered that in a case where impregnation in the thickness direction of the obtained support was carried out, a large number of fibers that inhibit impregnation were present, and impregnation and permeation of perfluoropolyether in the thickness direction of the support were inhibited.

Since the supports of Comparative Examples 2, 4, and 6 had low permeation rates of perfluoropolyether in the thickness direction of 0.4%, 1.5%, and 0.8%, respectively, an amount of the solid electrolyte slurry permeating in the thickness direction of the support was small as compared with the supports of Examples. As a result, it is considered that carrier-ion pathways formed inside the solid electrolyte sheet in the thickness direction were reduced.

That is, from a comparison between Examples and Comparative Example 2, it can be understood that a blending amount of synthetic resin binder fibers that are unable to retain the fibrous form is preferably less than 10% by mass. In addition, from a comparison between Examples and Comparative Example 4, it can be understood that the basis weight of the support is more preferably 15.0 g/m² or less. From a comparison between Examples and Comparative Example 6, it can be understood that the fiber diameter of the non-fibrillated fibers used in the support is preferably 1 µm or more, and the fiber length is preferably 1 mm or more. In addition, from a comparison between Examples and Comparative Examples 2, 4, and 6, it can be understood that the permeation rate of perfluoropolyether in the thickness direction of the support is preferably 2% or more.

The all-solid-state batteries using the supports of Examples 2 and 6 had higher resistance and lower discharge capacity as compared with the all-solid-state battery using the support of Example 4. In addition, the supports of Examples 2 and 6 had higher permeation rates of perfluoropolyether in the thickness direction as compared with the support of Example 4. The permeation rate of perfluoropolyether in the thickness direction was 28.8% for the support of Example 2 and 29.3% for the support of Example 6, which are higher than 23.9% for the support of Example 4.

In addition, the all-solid-state batteries using the supports of Examples 1 and 5 had higher resistance and lower discharge capacity as compared with the all-solid-state battery using the support of Example 3. Furthermore, the supports of Examples 1 and 5 had lower permeation rates of perfluoropolyether in the thickness direction as compared with the support of Example 3. The permeation rate of perfluoropolyether in the thickness direction was 2.3% for the support of Example 1 and 2.1% for the support of Example 5, which are lower than 4.6% for the support of Example 5.

That is, from a comparison between Examples 1, 2, 5, and 6 and Examples 3 and 4, it is more preferable that the permeation rate of perfluoropolyether in the thickness direction of the support is in a range of 4% to 25%.

The support of Comparative Example 3 is a support in which through-holes are formed in a film, unlike the supports of Examples, which are paper or nonwoven fabric. Although the through-holes of the support of Comparative Example 3 can be filled with the solid electrolyte, the solid electrolyte can be filled only inside the formed through-holes. In addition, in the solid electrolyte sheet formed from the support of Comparative Example 3, it is considered that, at an interface between the positive electrode or the negative electrode and the solid electrolyte sheet, an interface between the positive electrode or the negative electrode and a film, which is an insulator, is present. As a result, it is considered that the all-solid-state battery using the support of Comparative Example 3 had higher resistance and lower discharge capacity as compared with the all-solid-state batteries using the supports of Examples.

From a comparison between Examples and Comparative Example 3, it can be understood that, in order to reduce resistance of the all-solid-state battery, paper and nonwoven fabric are suitable as the support.

The above-described embodiment is merely an example, and for example, compositions of the carrier ions, the solid electrolyte, the positive electrode, and the negative electrode may be appropriately modified by a person skilled in the art.

As described above, by using paper and nonwoven fabric having a permeation rate of perfluoropolyether in the thickness direction of 2% to 30%, a support having excellent permeability of the solid electrolyte slurry into the support can be obtained. As a result, a necessary number of carrier-ion pathways in the thickness direction of the support can be formed. By using this support, an all-solid-state battery having low resistance can be obtained.

Note that the present invention is not limited to the configurations described in the above-described embodiments, and various modifications and changes may be made without departing from the scope of the present invention.

## Claims

1. A support for retaining a solid electrolyte of a secondary battery, the support for a secondary battery comprising:
at least one selected from paper and nonwoven fabric; and
fibrillated fibers and non-fibrillated fibers, wherein
a permeation rate of perfluoropolyether in a thickness direction is 2% to 30%.

2. The support for a secondary battery according to claim 1, wherein
a content of the fibrillated fibers is 1% to 99% by mass based on all fibers.

3. The support for a secondary battery according to claim 2, wherein
a content of the fibrillated fibers is 50% to 85% by mass based on all fibers.

4. The support for a secondary battery according to claim 1, wherein
the paper and the nonwoven fabric contain fibers having an average fiber diameter of 1 to 15 µm.

5. The support for a secondary battery according to claim 1, wherein
the paper and the nonwoven fabric contain fibers, each having a fiber length of 1 to 6 mm.

6. The support for a secondary battery according to claim 1, wherein
the fibrillated fibers have a CSF value of 0 to 400 ml.

7. The support for a secondary battery according to claim 1, wherein
the fibrillated fibers each have a fiber length of 0.1 to 2 mm.

8. A solid electrolyte sheet in which a solid electrolyte is retained by a support having a thin film shape, including at least one selected from paper and nonwoven fabric, and containing fibrillated fibers and non-fibrillated fibers, wherein
a permeation rate of perfluoropolyether in a thickness direction of the support is 2% to 30%.

9. A secondary battery comprising: a positive electrode layer; a negative electrode layer; and a solid electrolyte sheet disposed between the positive electrode layer and the negative electrode layer, wherein
the solid electrolyte sheet includes
a support including at least one selected from paper and nonwoven fabric, containing fibrillated fibers and non-fibrillated fibers, and having a permeation rate of perfluoropolyether of 2% to 30% in a thickness direction, and
a solid electrolyte retained by the support.
